# EUROPEAN PATENT APPLICATION

(11) **EP 4 755 864 A1**
(43) Date of publication of application: **10.06.2026**
(21) Application number: 24383341.5
(22) Date of filing: 09.12.2024
(51) Int. Cl.: C04B 20/00, C04B 28/02

(54) **STRUCTURAL GROUTS FOR MARINE CONSTRUCTION**

(71) Applicant: Sika Technology AG, 6340 Baar (CH)
(72) Inventor: CALAMA, Juan Antonio, 28108 Madrid (ES); CHIA, Kok Seng, Singapore 048616 (SG); FISCHER, Michael, 68163 Mannheim (DE); GRONBECH, John, 8048 Zürich (CH); KLEIN, Matthias, 83308 Trostberg (DE)
(74) Representative: Sika Patent Attorneys

(57) **Abstract**

The present invention relates to a method for grouting a marine structure, especially offshore wind turbine structure, where a grouting composition comprises Portland cement and at least one supplementary cementitious material. Furthermore, the present invention relates to a marine structure, preferably an offshore wind turbine structure, constructed thereby.

## Description

### Technical Field

The present invention relates to a method for grouting a marine structure, especially an offshore wind turbine structure, where the grout composition comprises Portland cement and at least one supplementary cementitious material. Furthermore, the present invention relates to a marine structure, preferably an offshore wind turbine structure, constructed thereby.

### Background of the invention

Marine construction, particularly within the offshore sector, is undergoing substantial expansion, propelled by the escalating global demand for renewable energy sources. This growth is primarily attributed to the rapid development and deployment of offshore wind farms, which are seen as a cornerstone in the transition to sustainable energy systems. Additionally, advancements in tidal and wave power technologies are contributing to the sector's momentum, offering innovative solutions for harnessing renewable energy from marine environments.

This surge in activity is further driven by governmental policies and international commitments to reduce carbon emissions, coupled with significant investments in green energy infrastructure. Offshore wind farms are increasingly being developed in deeper waters, necessitating the construction of sophisticated structures such as floating platforms, monopiles, and jacket foundations to support larger turbines and optimize energy generation.

This sustained growth in marine construction highlights the sector's critical role in meeting global renewable energy goals while driving technological advancements and fostering economic development. As offshore energy projects scale up, the demand for high-performance materials increases.

Grouted structural connections are vital for offshore infrastructure installation due to their ability to create strong and reliable joints between structural elements, such as piles and jackets, or monopiles and transition pieces. These connections distribute loads efficiently, ensuring stability and durability under challenging offshore conditions, including extreme loads from waves, wind, and currents.

However, the marine sector faces challenges related to grouting materials, particularly the need for high performance grouts (HPG) and ultra-high-performance grouts (UHPG). These grouts offer superior compressive strength, durability, and fatigue resistance compared to conventional grouts, ensuring the ability to withstand the extreme and dynamic loads encountered in offshore environments.

Ensuring a sufficient supply of HPG and UHPG is essential to meet the growing demands of the offshore energy sector, particularly as projects scale up with larger turbines, deeper installations, and more demanding conditions. While HPG and UHPG are critical for the reliability and performance of offshore infrastructure, its sustainability must be addressed to align with the broader goals of the energy transition.

Traditional grouts used in the offshore construction are typically based on Portland cement as a binder (US9435321, Kolon Global Corporation; EP3162776, RWE Renewables GmbH). Similarly, the production of HPG and UHPG relies heavily on Portland cement, a material that significantly contributes to global CO₂ emissions due to the energy-intensive processes involved in its production. As offshore renewable energy projects like wind farms are designed to combat climate change, it is paradoxical to rely on materials with high carbon footprints for their construction.

Making UHPG more sustainable is essential to reduce its environmental impact and ensure it complements the goals of the energy transition. Reducing cement content in HPG and UHPG, by incorporating alternative supplementary materials like fly ash, slag, or calcined clays, can significantly decrease embodied CO₂ emissions while maintaining or even enhancing the grouts performance.

Furthermore, leveraging advancements in material science to optimize mix designs and utilize locally available resources can lower transportation emissions and improve overall sustainability.

By prioritizing the development of greener HPG and UHPG formulations, the industry not only mitigates its environmental footprint but also positions itself as a proactive participant in the global shift towards sustainable practices. This ensures that offshore wind and other renewable infrastructure projects fully embody the principles of sustainability, making them truly future-proof and aligned with the objectives of combating climate change.

Moreover, in addition to meeting customer specifications, these low-carbon grouts must comply with the relevant guidelines. Among the most recognized are the DNV (Det Norske Veritas) standards, such as DNV-ST-C502 and DNV-ST-0126, and ISO standards, such as ISO 19902 and ISO 19901-1 to 9.

Therefore, there is still a need for improved methods of grouting marine structures, especially offshore structures, specifically for grouting with formulations of reduced Portland cement content.

### Summary of the invention

It is an object of the present invention to provide a method for grouting a marine structure, in particular an offshore wind turbine structure, using a grout composition of reduced Portland cement content. Especially, the grout composition used in the method of the present invention has a reduced carbon footprint. It is also an object of the present invention to ensure that the mechanical performance of the grouted connection, especially the compressive strength, remains uncompromised. This is achieved through the partial replacement of Portland cement with supplementary cementitious materials.

Additionally, the invention aims to provide marine structures, especially offshore wind turbine foundations, constructed using grout compositions incorporating these supplementary cementitious materials.

It has surprisingly been found that the object of the present invention is solved by the subject matter of claim 1. It is thus at the core of the present invention to partially replace Portland cement with at least one supplementary cementitious material in the cementitious binder. Further aspects of the present invention are the subject of independent claims. Preferred embodiments are the subject matter of dependent claims.

### Ways to carry out the invention

In a first aspect the present invention relates to a method for grouting a marine structure, especially an offshore wind turbine structure, said method comprising the steps of
(i) mixing water and a composition **C** to obtain a mixture **M,** said composition **C** comprising,
   (a) a cementitious binder, comprising Portland cement and at least one supplementary cementitious material;
   (b) at least one aggregate,
(ii) pumping the mixture **M** into a void to be grouted, and
(iii) hardening the mixture **M** in the void,
wherein the hardened mixture **M** has a compressive strength at 28 days of at least 60 N/mm², preferably at least 80 N/mm², most preferably at least 90 N/mm², measured according to EN 12390-3:2019 on 150 × 300 mm cylinders at 20 °C.

According to preferred embodiments, the hardened mixture **M** has a compressive strength at 28 days, determined according to EN 12390-3:2019, of at least 100 N/mm², preferably at least 130 N/mm².

A marine structure, in the context of the present invention, encompasses both offshore and coastal structures.

A void to be grouted, in the present context, encompasses annular gaps, annuli between rock and pile, annuli between anchor and the surrounding soil or rock of the seabed, as well as cracks, voids, crevices, and deteriorated areas caused by wear in marine structures. An annular gap refers to the circumferential space or void between two concentric components, typically a cylindrical inner member and an outer member, within the marine structure or system. Examples include the conical or cylindrical connection between a monopile foundation and a transition piece, or the cylindrical connection between jacket legs and preinstalled piles, and/or between jacket sleeves and post-installed piles.

A cementitious binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime).

Within the present context, the Portland cement, also called Ordinary Portland Cement (OPC), is a CEM I under standard EN 197-1:2011. However, other OPC classified, for example, under the relevant ASTM, JIS or Chinese standards is also suitable. According to further embodiments, the OPC is a white cement. According to further embodiments, the OPC is a grey cement.

A supplementary cementitious material (SCM) is a material used in conjunction with or as a partial replacement of Portland cement to enhance both the fresh and hardened properties of cementitious mixtures. A mixture of Portland cement with one SCM is called a blended cement, whereas a mixture of Portland cement with more than one SCM is called a composite cement. SCMs can exhibit hydraulic or pozzolanic activity, or both, contributing to the formation of additional cementitious compounds through their reaction with calcium hydroxide in the presence of water.

Common examples of SCMs are fly ash, slag, silica fume, limestone filler and pozzolans. Pozzolans can be natural pozzolans and/ or synthetic pozzolans. Pozzolanic materials, within the present context, are the materials as defined in the standard EN 197-1:2011.

These SCMs contribute to the optimization of workability, density, setting time, and antiwashout properties, making the cementitious mixture, especially the grout, suitable for underwater applications. Furthermore, they significantly improve the grouts resistance to chloride ingress, freeze-thaw cycles, and mechanical fatigue, thereby ensuring structural robustness and longevity.

Additionally, SCMs are cost-effective, as they are often industrial by-products, and they promote efficient resource utilization by repurposing waste materials and reducing reliance on raw cementitious resources.

Lastly, the use of SCMs as a partial replacement for Portland cement results in reduced cement content, leading to lower carbon emissions and increased sustainability.

The composite cement, in the context of the present invention, can be cement of the type CEM II, CEM III, CEM IV or CEM V according to EN 197-1:2011 or a limestone calcined clay cement (LC3).

According to preferred embodiments, the cementitious binder of the present invention comprises biochar as a SCM.

According to further preferred embodiments, the cementitious binder of the present invention comprises biochar and at least one additional SCM.

Biochar, in the present context, is a carbon-rich product that remains after biomass is thermodynamically converted in the absence or limited presence of oxygen (a process known as pyrolysis). Through pyrolysis, the carbon stored in the biomass becomes locked in the biochar. The biomass used to produce biochar of the present invention is preferably sourced from a biomass waste, for example fruits pits, coconuts shells, common wood chips, waste wood, washed coffee husks, coffee pomace, lemon pomace, sliced hemp straw, paper waste, chicken droppings, hemp clay mixture, hemp waste or mixed waste.

According to preferred embodiments, the biochar is obtained by pyrolysis, preferably by slow pyrolysis, of woody biomass, herbaceous biomass, agricultural biomass, waste biomass, or manure biomass.

Limestone calcinated clay cement (LC3) is known to the person skilled in the art and described, for example, in the review paper "Research evolution of limestone calcined clay cement (LC3), a promising low-carbon binder -A comprehensive overview" by J. Mañosa, A. Calderón, R. Salgado-Pizarro, A. Maldonado-Alameda, J. M. Chimenos, (Vol. 10(3), 2024, Heliyon). Examples of LC3 binder-type compositions are [Portland cement wt. %: Calcined clay wt. %: Limestone wt. %: Calcium sulphate wt. %] = [70:20:10:0], [55:30:15:0], [40:40:20:0], [65:20:10:5], [50:30:15:5], [35:40:20:5]. According to the most preferred embodiments, the LC3 cement of the present invention comprises between 50 and 65 wt. % of Portland cement.

According to embodiments, the grouts based on LC3 cement are characterized by higher durability compared to the OPC-based grouts.

Calcined clays, within the present context, may be for example low-temperature calcined clays and/or high-temperature calcined clays. Low-temperature calcined clays are clays that have been thermally treated at temperatures between 500 1200°C. Such low-temperature calcination typically leads to removal of interlayer water and at least partial, preferably full, de-hydroxylation. For example, low-temperature calcined clay minerals may be produced in rotary kiln or in a flash calciner. High-temperature calcined clays are clay minerals that have been thermally treated at temperatures above 1200 °C and typically between 1300 - 1400 °C. High-temperature calcined clays typically are crystalline or contain high amounts of crystalline phases, especially of mullite.

The term aggregate as used in the context of the present invention refers to mineral materials that are non-reactive in the hydration reaction of cementitious binders. Aggregates can thus be any aggregate typically used for mortar and/or concrete. Typical aggregates are for example rock, crushed stone, gravel, slag, sand, especially quartz sand, river sand and/or manufactured sand, recycled concrete, glass, expanded glass, pumice, perlite, vermiculite, basalt, corundum, olivine, bauxite, calcinated bauxite, and/or fine aggregates such as ground limestone, and/or ground dolomite. Aggregates useful for the present invention can have any shape and size typically encountered for such aggregates. Aggregates useful for the present invention are as described for example in EN 12620:2008-07 and EN 13139:2015-07.

The average particle size of the aggregate is preferably between 0.063 mm and 4 mm, more preferably between 0.063 mm and 2 mm, even more preferably between 0.063 mm and 1 mm, as determined by the sieve analysis according to EN 12192-1:2002 or EN 933-1:2012. However, other aggregates can also be used for specific purposes.

A composition **C** of the present invention advantageously further comprises fillers. Filler is non-reactive in the hydration reaction of cementitious binders and has a particle size predominantly passing a 0.063 mm sieve. Typical fillers include finely ground rock flour such as fine limestone.

Preferably, fillers and aggregates of different particle sizes are mixed to optimally adjust the properties of the cementitious composition. Such mixtures are known to the person skilled in the art.

According to preferred embodiments, the composition **C** of the present invention comprises biochar as an aggregate and/ or a filler.

According to preferred embodiments, the composition **C** is delivered in bags, preferably small bags up to 100 kg and/ or big bags up to 12000 kg, preferably up to 1500 kg. According to further embodiments, the composition **C** is delivered in cement tankers and/ or horizontal silos with the capacity up to 24000 kg.

According to further preferred embodiments, at the port, the composition **C** is either transferred to silos certified for offshore use or, if delivered in bags, it remains in its original bags and is transferred to the offshore vessel for a subsequent usage. The composition **C** is discharged from the bags through gravity discharge or transferred pneumatically from cement tankers and horizontal silos. The composition **C** is further transferred between silos through pneumatic transfer or mechanical transfer including buckets, screw and chain conveyors.

When grouting operations are ready to commence, the composition **C** is transferred to the mixing unit through pneumatic or mechanical transfer from offshore silos or from bags through gravity discharge directly to the mixing unit or to a hopper from which the composition **C** is fed to the mixing unit either through gravity discharge or mechanical transfer. The composition **C** is mixed with water to obtain a mixture **M.** The mixture **M** should be placed after being thoroughly mixed using the appropriate mixing and pumping apparatus. The placement method may differ based on the type and size of the void to be grouted, as well as the environmental conditions. It is essential to select mixing and pumping equipment, along with hoses, that facilitate the rapid placement of grout.

According to the present invention, for projects requiring large volumes of grout, the mixing of water and composition **C** is preferably done by the Recirculating Jet Mixer (RJM). Such mixer is known in the art for continuous mixing of grouts. The dry composition **C** is pneumatically transferred from the storage silo to the surge tank located above the RJM. In the mixing tank, a vortex motion combines the dry composition **C** with potable water to achieve a required consistency of mixture **M.** Output rates of up to 60 m³, preferably of up to 30 m³ per hour can be achieved when mixing water and composition **C** using the RJM. According to further preferred embodiments, a forced action mixer, for example orbital mixer or planetary pan mixer, can be used. Such mixer is known in the art for batch mixing of grouts. The dry composition **C** is pneumatically or mechanically transferred from the storage silo to the surge tank above the mixing unit or units and weighed using offshore-compatible load cells. Once the specified weight of composition **C** is reached, mixing can begin in the unit below the surge tank. The composition **C** then drops into the forced action mixer, where the appropriate amount of potable water is added, and the materials are mixed in a planetary or orbital motion. The mixing time depends on the mixing intensity. Once properly mixed, the wet mixture **M** flows to a wet hopper or the hopper of the concrete piston pump, which then pumps it into the structure. To ensure a continuous flow of mixture **M,** a second set of powder tank and forced action mixer is included in the mixing and pumping setup. Output rates of at least 10 m³ per hour, preferably at least 12 m³ per hour, most preferably at least 40 m³ per hour, can be achieved when mixing water and composition **C** using the forced action mixer.

According to further preferred embodiments, a forced action mixer can be used. The forced action mixer can either be a pan-type, or a planetary-type or a twin-shaft or a plowshare type of mixer. The mixing plant consists of two mixers that mix the water with composition C. In the event that one mixer fails during installation, operations can continue with the remaining mixer, ensuring minimal disruption to the workflow. Alternatively, the mixing plant can also consist of one mixer of sufficient mixing volume capacity, working in series with an intermediate wet hopper of similar or larger volume capacity fitted with an effective agitator unit.

Depending on the mixing method used, either the fresh density (for example according to EN 12350-6:2019) and / or the flow (for example according to ASTM C1437-20) of the fresh mixture **M** is regularly measured. Additional water is added as necessary to achieve the desired grout quality. Once the optimal water-to-composition **C** ratio is established, pumping of the mixture **M** can begin.

According to preferred embodiments, for mixing with a RJM, an additional in-line densitometer can be used as back-up to the densitometer mounted on the mixer unit.

According to preferred embodiments, the weight ratio of water to a composition **C** is in a range from 0.05 to 0.5, preferably from 0.05 to 0.2.

According to further embodiments, once mixed, the mixture **M** is pumped through hoses to the void to be grouted and is subsequently carefully injected, ensuring a continuous and uniform flow that completely fills the void. Depending on the specific requirements, this grouting process may be done in stages or continuously, ensuring complete and even distribution of the mixture **M.**

According to further embodiments, the hose length is not more than 250 m, preferably not more than 225 m, most preferably not more than 200 m.

According to still further embodiments, the hose elevation is not more than 40 m, preferably not more than 30 m, most preferably not more than 25 m. The hose elevation, within the present context, refers to precise vertical positioning and height adjustment of the grout delivery hose relative to the void to be grouted.

According to still further embodiments, the internal diameter of the hose is between 1-10", preferably between 1-5", most preferably between 2-4".

According to still further embodiments, the hose pressure of grouting is not more than 80 bar, preferably not more than 40 bar, most preferably not more than 20 bar. However, this pressure value depends on various factors, including the hose length, inner hose diameter, hose elevation, pump type and pump speed.

The hydraulic pressure of grouting, within the present context, refers to the pressure exerted by the mixture **M** as it is pumped into the void to be grouted during the grouting process.

According to preferred embodiments, the recommended grout thickness ranges from 25 to 1000 mm, preferably from 200 to 800 mm, most preferably from 400 to 600 mm.

A grouted connection (GC) is a crucial element in marine construction, particularly in the offshore wind turbine structures, as it distributes loads (axial, bending, torsion, combination of two or more) between grouted elements and ensures the overall stability of the structure.

According to preferred embodiments, the method of grouting of the present invention can be used for grouting of vertically and diagonally oriented cylindrical-shaped grouted connections, filled with displacement grouting (such as monopile and jacket foundations).

According to further preferred embodiments, the method of grouting of the present invention can be used for grouting of vertically oriented cylindrical-shaped rock-socket grouted connections, filled with an extracted stinger placement method or displacement grouting (such as rock socket or steel member filling).

The displacement grouting, in the present context, is a method used in offshore construction to enhance the stability of foundations and subsea structures. In this technique, grout is injected into the seabed or surrounding soil to displace water and existing materials, creating a dense, solid mass that improves load-bearing capacity and reduces the risk of settlement or soil erosion.

The stinger, in the present context, refers to specialized pipes or hoses used to inject grout into hard-to-reach or deep areas, such as in foundation work, pile grouting, or void filling. A stinger typically consists of a flexible hose or a rigid pipe connected to a grout pump, allowing for the precise delivery of grout to the desired location.

The extracted stinger placement method, in the present context, refers to a grouting technique where a stinger is used to inject grout at a designated depth. As the grout fills the cavity or void, the stinger is gradually extracted to ensure even distribution and complete fill.

According to preferred embodiments, the mixture **M** begins to harden after placing. Adequate time is allowed for curing to ensure the grouted connection reaches its full strength and provides structural stability.

According to preferred embodiments, the hardened mixture **M** has a flexural strength at 28 days of at least 10 N/mm², preferably of at least 15 N/mm², most preferably of at least 20 N/mm², determined according to EN 196-1:2016 orASTM C348-14.

According to preferred embodiments, the hardened mixture **M** in the grouted connection of the present invention is resistant to corrosion, especially in splash zones where oxygen-rich seawater would typically pose a serious corrosion risk to the integrity of critical elements in marine structures, such as offshore wind turbine structures. The grout forms a protective barrier, isolating both the structural steel and bolted connections from direct exposure to seawater.

According to further preferred embodiments, the method of the present invention can be used for installation of the marine structures, especially offshore wind turbine structures.

According to still further embodiments, the method of the present invention can be used to repair existing marine structures, especially offshore wind turbine structures.

According to still further embodiments, the method of the present invention can be used for grouting onshore wind turbine structures, especially in coastal areas.

The repair of existing marine structures, in the present context, refers to injecting mixture **M** into the void to be grouted, such as cracks, voids, deteriorated areas of the original structure, and /or into intentionally enlarged section-area of an existing member structure with external add-on such as a structural steep clamp or mold, through effectively filling gaps and providing additional load transfer capabilities. The use of mixture **M** not only helps to bond the existing materials but also improves resistance to environmental factors such as corrosion and fatigue. By utilizing the method of the present invention, marine structures can be effectively reinforced and extended in service life, ensuring safety and performance under dynamic marine conditions.

According to still further embodiments, the method of the present invention can be used for maintenance of existing marine structures, especially offshore wind turbine structures.

The maintenance of marine structures, in the present context, refers to proactively addressing potential weaknesses and ensuring long-term durability of the structures. This process involves the strategic injection of mixture **M** into the voids to be grouted, such as cracks, voids, crevices, and deteriorated areas, to restore structural strength and enhance overall performance. By reinforcing the connections between various elements, grout not only mitigates the effects of environmental factors like corrosion and mechanical fatigue but also helps maintain operational efficiency. Implementing the method of the present invention as part of a routine maintenance program allows for the timely identification and remediation of issues, ultimately contributing to the safety and resilience of marine structures in challenging marine conditions.

In addition to its use in repairs, mixture **M** can be applied as a protective coating or external membrane around the marine structure, providing additional structural strength while preventing further corrosion.

By addressing both installation and maintenance requirements, this method for grouting of marine structures provides a reliable solution for mitigating the operational challenges of marine infrastructure, especially offshore infrastructure, ensuring compliance with rigorous industry standards and supporting the advancement of sustainable energy solutions.

According to still further embodiments, the method of the present invention can be used for upgrading the existing marine structures, especially offshore wind turbine structures.

Upgrading and repowering of existing marine structures, in the present context, refers to enhancing their capacity and functionality to meet modern operational demands and regulatory standards. This process may include retrofitting older platforms or wind turbines with advanced technologies, requiring structural modifications to accommodate new equipment, such as more powerful generators, or increased loads.

According to embodiments, the method for grouting a marine structure is characterized in that the void to be grouted is a conical or a cylindrical connection between a monopile foundation and a transition piece, or a cylindrical connection between jacket legs and preinstalled piles, or between jacket sleeves and post-installed piles, or is a void between a rock and a pile, especially a monopile, in an offshore wind turbine structure.

A conical grouted connection, in the present context, consists of two co-axial frusto-conical tubes overlapping each other, with the annular gap between them filled with HPG or UHPG. The conical shape provides enhanced load transfer and mechanical interlock due to the tapered geometry.

In the present context, a cylindrical grouted connection is formed by the overlap of two co-axial cylindrical tubes, typically a transition piece or a jacket leg paired with a pile, with the annular space between them filled with HPG or UHPG. This design ensures uniform load distribution and structural stability in marine applications.

A void between a rock and a pile, in the present context, is filled by a mixture **M,** also called a rock socket grout. Said grout is used to fill the annular space between a drilled pile and the surrounding rock in marine foundation applications. In instances where piles cannot be driven into rocky seabeds, drilling creates a socket that is slightly larger than the pile, resulting in a void that must be filled with grout. This process provides essential structural stability by securely anchoring the pile into the rock formation and ensuring uniform load distribution from the pile to the seabed. Rock socket grout enhances the axial, torsional and lateral load-bearing capacity of marine structures, preventing displacement or movement under dynamic marine conditions. Additionally, the grout is formulated to withstand the harsh marine environment, offering resistance to water ingress and chemical degradation.

According to further preferred embodiments, a void to be grouted is located between an anchor and a surrounding soil or rock of the seabed. This void is filled with grout to secure the anchor in place and enhance the load transfer. Proper grouting of such void ensures effective bonding between the anchor and the seabed material.

According to further preferred embodiments, the anchor is made of steel and/ or concrete.

According to preferred embodiments, the cylindrical connection comprises shear keys.

Shear keys are structural features designed to resist forces and enhance stability by facilitating the transfer of loads between connected components. In marine construction, shear keys are typically integrated into foundations and structural elements to prevent movement or slippage under extreme environmental conditions, such as heavy waves or seismic events, thereby improving the overall integrity and durability of marine structures like platforms and wind turbine foundations.

According to embodiments, the method for grouting a marine structure is characterized in that the supplementary cementitious material is selected from the group consisting of steelmaking slag, ironmaking slag, ferronickel slag, copper slag, aluminum dross, limestone, fly ash, bottom ash, silica fume, nanosilica, volcanic ashes, pumice, trass, clays, bauxite, bio-waste residue, biochar, ashes from biowaste, ashes from municipal waste, waste glass, or mixtures thereof.

Ferronickel slag, in the present context, is a by-product generated during the production of ferronickel, an alloy of iron and nickel, through smelting processes. It primarily consists of silicate minerals and metal oxides.

Copper slag, in the present context, is a waste material produced during the smelting of copper ores. It is composed mainly of silicate compounds and metal oxides.

Aluminum dross, in the present context, is a by-product generated during the smelting and refining of aluminum in smelting or recycling processes. It forms as a result of aluminum's reaction with oxygen and other impurities at high temperatures, creating a solid layer of oxidized material on the surface of molten aluminum. Aluminum dross typically exists in two forms: white dross, containing higher metallic aluminum content, and black dross, which has lower metallic content but more oxides and salts. Its composition primarily includes aluminum oxide, metallic aluminum, and salts such as sodium chloride and potassium chloride.

Bottom ash, in the present context, is a coarse, granular by-product that remains at the bottom of a combustion chamber after the incineration of coal or waste materials in power plants and industrial furnaces. It consists of unburned minerals, metals, and inorganic materials.

Limestone stands for calcium carbonate (CaCO₃). In preferred embodiments of the present invention the chemical composition of limestone is as defined in standard EN 197-1:2011. In the alternative, limestone may also stand for magnesium carbonate, dolomite, and or mixtures of magnesium carbonate, dolomite, and/or calcium carbonate. It is especially preferred that limestone within the present context is a naturally occurring limestone mainly consisting of calcium carbonate (typically calcite and/or aragonite) but also containing some magnesium carbonate and/or dolomite. Limestone may also be a naturally occurring marl.

According to preferred embodiments, limestone is a ground material that is not heat treated. Especially, the limestone is not decarbonated. According to embodiments, the limestone has a Blaine surface of 3000 - 15000 cm²/g. The Blaine surface is measured as described in standard EN 196-6:2010.

Fly ash, in the present context, is a fine powder that is a by-product of burning pulverized coal. Fly ash is a pozzolan. It comprises aluminous and siliceous material. In particular, in a method of the present invention, the fly ash is according to standard JIS 6201:2015. However, fly ash according to other standard, such as ASTM C618-22 or EN 450-1:2012 is also suitable.

Silica fume, also known as microsilica, in the present context refers to a by-product of the silicon and ferrosilicon production processes. It consists of extremely fine particles of amorphous silicon dioxide that have a high surface area, typically ranging from 15000 to 30000 m²/kg. These particles are less than 1 micrometer in diameter and exhibit pozzolanic properties. Silica fume provides high abrasion and impact resistant, as well as corrosion resistance.

Nanosilica, in the present context, refers to silicon dioxide (SiO₂) particles with sizes typically ranging from 1 to 100 nm, exhibiting a very high surface area and reactivity. The particle size of nanosilica can be measured by, for example, dynamic light scattering method.

Volcanic ash, in the present context, refers to the fine particles of pulverized rock, minerals, and volcanic glass ejected into the atmosphere during a volcanic eruption.

Pumice, in the present context, is a light, porous volcanic rock formed from rapidly cooling, gas-rich lava, often used in construction, abrasives, and as a soil conditioner due to its low density and abrasive properties.

Trass, in the present context, is a fine, natural volcanic ash or tuff primarily composed of weathered volcanic rock, often used as a pozzolanic material.

Clays, within the present context, are solid materials composed to at least 30 wt. %, preferably to at least 35 wt. %, especially to at least 75 wt. %, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, and micas, especially muscovite and illite, as well as mixtures thereof are especially preferred. An example of a preferred derivative of kaolinite is metakaolin, obtained by the thermal decomposition of kaolinite.

Clays within the present context can be any type of clays, for example crude clays and/or calcined clays.

Crude clays are e.g. clay minerals extracted from a quarry, optionally purified and optionally dried.

Bauxite, in the present context, is a sedimentary rock primarily composed of aluminum oxides and hydroxides, along with various impurities such as silica, iron oxides, and titanium dioxide. It is the principal ore from which aluminum is extracted, typically processed through the Bayer process to produce alumina, which is then refined to obtain aluminum metal. In the present invention, bauxite can be used in either its natural or calcinated form.

According to further embodiments, the mixture **M** further comprises at least one alkaline activator, preferably alkali metal carbonate, alkali metal hydroxide, alkaline-earth metal hydroxide, alkaline-earth metal oxide, alkali metal silicate, sodium sulphate, or mixture thereof.

According to embodiments, the method for grouting a marine structure is characterized in that the ashes from biowaste originate from rice husks, sugar cane, bagasse, coconut shell, olive pit, palm kern shell, wood, tea, tobacco, corn cob, peat, almond shell, pine needle, grape pomace, and/ or wheat straw.

According to embodiments, the method for grouting a marine structure is characterized in that the steelmaking slag is basic oxygen furnace slag, electric arc furnace slag and/ or ladle slag, preferably basic oxygen furnace slag.

Steelmaking slag, within the present context, is a by-product from the steelmaking process. Steel making slag is obtained, for example, in the Basic Oxygen Furnace (BOF) process, the Electric Arc Furnace (EAF) process, the Induction Furnace process, the Ladle Refining Furnace (LRF) process, and the Open Hearth process.

A very preferred type of steelmaking slag within the present context is basic oxygen furnace slag (BOF), also called basic oxygen slag (BOS).

According to further preferable embodiments, basic oxygen slag (BOS) has a Blaine fineness of between 2000 - 12000 cm2/g, preferably between 4000 - 6000 cm2/g or 6000 - 8000 cm2/g. Blaine fineness can be measured according to standard EN 196-6:2018.

According to embodiments, the method for grouting a marine structure is characterized in that the ironmaking slag is granulated blast furnace slag, preferably ground granulated blast furnace slag.

A ground granulated blast furnace slag (GGBS), within the present context, is obtained by quenching molten iron slag from a blast furnace in water or steam, to produce a glassy, granular product that is then dried and ground into a fine powder.

According to further preferable embodiments, GGBS has a Blaine fineness of between 2000 - 12000 cm²/g, preferably between 4000 - 6000 cm²/g or 6000 - 8000 cm²/g. Blaine fineness can be measured according to standard EN 196-6:2018.

According to embodiments, the method for grouting a marine structure is characterized in that the composition C comprises at least 5 wt. %, preferably at least 15 wt. %, more preferably at least 30 wt. %, most preferably at least 50 wt. %, relative to the total dry weight of the grout composition, of the at least one supplementary cementitious material.

According to preferred embodiments, the cementitious binder is composed of 90 to 95 wt. % of Portland cement and 5 to 10 wt. % of slag, preferably steelmaking slag and/ or ironmaking slag.

According to further preferred embodiments, the cementitious binder is composed of 80 to 90 wt. % of Portland cement and 10 to 20 wt. % of slag, preferably steelmaking slag and/ or ironmaking slag.

According to further preferred embodiments, the cementitious binder is composed of 70 to 80 wt. % of Portland cement and 20 to 30 wt. % of slag, preferably steelmaking slag and/ or ironmaking slag.

According to further preferred embodiments, the cementitious binder is composed of 50 to 70 wt. % of Portland cement and 30 to 50 wt. % of slag, preferably steelmaking slag and/ or ironmaking slag.

According to preferred embodiments, the cementitious binder is composed of 70 to 90 wt. % of Portland cement and 5 to 20 wt. % of slag, preferably steelmaking slag and/ or ironmaking slag and 5 to 10 wt. % of silica fume.

According to preferred embodiments, the cementitious binder is composed of 70 to 90 wt. % of Portland cement and 5 to 20 wt. % of GGBS and 5 to 10 wt. % of silica fume.

According to preferred embodiments, the composition **C** comprises, relative to the total dry weight of the composition **C,** 5 to 80 wt. %, preferably 60 to 80 wt. % of the cementitious binder.

According to embodiments, the method for grouting a marine structure is characterized in that the aggregate is selected from at least one of limestone, granite, marble, basalt, bauxite, olivine, aluminum oxide, sand or a combination thereof, preferably sand.

According to preferred embodiments, sand is silica sand and/or quartz sand.

According to further preferred embodiments, aggregates having a grain size as determined by sieve analysis according to EN 12192-1:2002 or EN 933-1:2012 in the range of 0.036 mm to 7 mm, preferably 0.075 mm to 6 mm, more preferably 0.125 mm to 3 mm are used in composition C of the present invention.

According to a particularly preferred embodiment, at least one aggregate comprises or consists of sand. Sand is a naturally occurring granular material composed of finely divided rock or mineral particles. It is available in various forms and sizes. Especially, at least one aggregate consist of sand, in particular quartz sand, river sand, manufactured sand, for example from granite or limestone, or mixtures thereof. Suitable sands are described in standards ASTM C778:2021 or EN 196-1:2016.

According to embodiments, the method for grouting a marine structure is characterized in that the temperature of a structural part immediately adjacent to the void to be grouted is between -5 °C and 45 °C, preferably -5 °C and 40 °C, most preferably 0 °C and 40 °C.

According to further embodiments, the method of the present invention can be used to grout marine structures when the water temperature is below 5 °C. In the present context, it can be referred to as a low-temperature grouting.

Low-temperature grouting, in the present context, refers to grouting with specifically formulated composition **C,** comprising antifreeze additives to ensure proper bonding and curing in cold marine environments, making it especially suitable for marine projects in polar or deep-water regions.

According to further embodiments, the method of the present invention can be used to grout marine structures when the water temperature is at least 35 °C, preferable at least 40 °C. In the present context, it can be referred to as a high-temperature grouting.

High-temperature grouting, in the present context, refers to grouting with specifically formulated composition **C,** comprising heat-resistant components to maintain structural integrity under high-heat conditions. Said high-temperature grouting is used in marine installations where structures are exposed to elevated temperatures, such as near thermal discharge zones or in geothermal applications.

According to embodiments, the method for grouting a marine structure is characterized in that the hardened mixture **M** has a static modulus of elasticity in compression of at least 30 GPa, preferably of at least 35 GPa, more preferably of at least 40 GPa, determined according to EN 12390-13:2021.

In the present context, the static modulus of elasticity (MOE) of grouted connections is a critical parameter for ensuring the mechanical integrity and longevity of structural connections, such as those between piles and jackets or other load-bearing components. A moderate MOE facilitates effective load distribution while compensating for surface irregularities, whereas a lower MOE contributes to reducing stress concentrations, thereby enhancing fatigue resistance in structural joints.

According to embodiments, the method for grouting a marine structure is characterized in that the hardened mixture **M** has an autogenous shrinkage lower than -0.320 mm/m, preferably lower than -0.310 mm/m, more preferably lower than 0.1 mm/m, most preferably lower than 0.06 mm/m, determined according to ASTM C1698:2019.

The autogenous shrinkage, in the present context, refers to a uniform reduction of internal moisture due to the hydration of cement, particularly in high-strength grouts with a low water-to-cement (w/c) ratio. This shrinkage is most significant when the w/c ratio is below 0.4, leading to potential cracking in the grout. While increasing the w/c ratio can help reduce autogenous shrinkage, it also negatively impacts the strength and impermeability of the grout. Autogenous shrinkage in the grouted connection is particularly critical in marine construction, where it can compromise the integrity of grouted connections under harsh environmental conditions, leading to potential cracking and long-term durability issues.

According to embodiments, the method for grouting a marine structure is characterized in that the slump flow measured after 240 min at 20 °C is between 150 and 350 mm, preferably between 200 and 300 mm, measured according to the standard ASTM C230-20 using cone on a glass plate method.

The viscosity of the mixture **M,** which can be called a grout in the present context, is a critical parameter in marine construction, as it influences pumpability and overall performance. It directly affects the grouts' ability to be transported through pumping systems without clogging or causing pressure build-up, ensuring efficient flow during placement. Proper viscosity also ensures that the grout can adequately flow and penetrate into confined spaces, such as gaps between piles and jackets, to achieve complete filling and bonding. If the grout is too viscous, it may not adequately flow into narrow spaces, leading to voids and weak points. Conversely, grout with insufficient viscosity may segregate or fail to provide adequate structural support, compromising the strength and stability of the connection under dynamic loads.

According to embodiments, the method for grouting a marine structure is characterized by the void to be grouted located between two connection members made of the same or different material and by the movement between the grouted connection members during the 24-hour period after grouting not exceeding 10 mm, preferably does not exceed 8 mm, more preferably does not exceed 5 mm, most preferably does not exceed 1 mm.

According to preferred embodiments, the connection members are made of steel and/ or cementitious material. A connection between steel and concrete is called a hybrid connection. According to further embodiments, the connection members are made of steel and carbon fiber composite.

All features and embodiments as described above, also apply to this aspect.

In another aspect the present invention relates to a marine structure, preferably selected from a foundation pier, a foundation terminal, a jetty, a wharf, a breakwater, a drilling platform, a bridge, a floating liquefied natural gas (FLNG) unit, an energy island, a hydrogen production plant, a tidal power platform, wave power platform, a harbour wall, an underwater tunnel, a sea wall, a groyne, offshore docking facility and/ or a wind turbine structure, obtained in a method of the present invention.

According to preferred embodiments, the marine structure of the present invention might also be selected from breasting dolphins, mooring dolphins and/ or fender structures.

According to embodiments, the offshore wind turbine structure is located below the seabed level, at the seabed level or above a seabed level.

According to embodiments, the offshore wind turbine structure is selected from a gravity base structure, a monopile, a jacket, or a floating structure.

According to preferred embodiments, the floating structure of the present invention is assembled onshore.

According to further preferred embodiments, the floating structure is selected from a barge, a semi-submersible, a spar buoy or a tension leg platform.

All features and embodiments as described above, also apply to this aspect.

## Claims

1. A method for grouting a marine structure, especially an offshore wind turbine structure, said method comprising the steps of
(i) mixing water and a composition **C** to obtain a mixture **M,** said composition **C** comprising,
(a) a cementitious binder, comprising Portland cement and at least one supplementary cementitious material;
(b) at least one aggregate,
(ii) pumping the mixture **M** into a void to be grouted, and
(iii) hardening the mixture **M** in the void,
wherein the hardened mixture **M** has a compressive strength at 28 days of at least 60 N/mm², preferably at least 80 N/mm², most preferably at least 90 N/mm², measured according to EN 12390-3:2019 on 150 × 300 mm cylinders at 20 °C.

2. The method according to claim 1, wherein the void to be grouted is a conical or a cylindrical connection between a monopile foundation and a transition piece, or a cylindrical connection between jacket legs and preinstalled piles, or between jacket sleeves and post-installed piles, or is a void between a rock and a pile, especially a monopile, in an offshore wind turbine structure.

3. The method according to any of the preceding claims, wherein the supplementary cementitious material is selected from the group consisting of steelmaking slag, ironmaking slag, ferronickel slag, copper slag, aluminum dross, limestone, fly ash, bottom ash, silica fume, nanosilica, volcanic ashes, pumice, trass, clays, bauxite, bio-waste residue, biochar, ashes from biowaste, ashes from municipal waste, waste glass, or mixtures thereof.

4. The method according to claim 3, wherein the ashes from biowaste originate from rice husks, sugar cane, bagasse, coconut shell, olive pit, palm kern shell, wood, tea, tobacco, corn cob, peat, almond shell, pine needle, grape pomace, and/ or wheat straw.

5. The method according to claim 3, wherein the steelmaking slag is basic oxygen furnace slag, electric arc furnace slag and/ or ladle slag, preferably basic oxygen furnace slag.

6. The method according to claim 3, wherein the ironmaking slag is granulated blast furnace slag, preferably ground granulated blast furnace slag.

7. The method according to any of the preceding claims, wherein the composition **C** comprises at least 5 wt. %, preferably at least 15 wt. %, more preferably at least 30 wt. %, most preferably at least 50 wt. %, relative to the total dry weight of the grout composition, of the at least one supplementary cementitious material.

8. The method according to any of the preceding claims, wherein the aggregate is selected from at least one of limestone, granite, marble, basalt, bauxite, olivine, aluminum oxide, sand or a combination thereof, preferably sand.

9. The method according to any of the preceding claims, wherein the temperature of a structural part immediately adjacent to the void to be grouted is between -5 °C and 45 °C, preferably -5 °C and 40 °C, most preferably 0 °C and 40 °C.

10. The method according to any of the preceding claims, wherein the hardened mixture **M** has a static modulus of elasticity in compression of at least 30 GPa, preferably of at least 35 GPa, more preferably of at least 40 GPa, determined according to EN 12390-13:2021.

11. The method according to any of the preceding claims, wherein the hardened mixture **M** has an autogenous shrinkage lower than -0.320 mm/m, preferably lower than - 0.310 mm/m, determined according to ASTM C1698:2019.

12. The method according to any of the preceding claims, wherein the flow spread measured after 30 min at 20 °C is at least 200 mm, preferably at least 250 mm, most preferably at least 300 mm, measured according to the standard ASTM C230-20.

13. The method according to any of the preceding claims, wherein the void to be grouted is located between two connection members made of the same or different material and wherein the movement between the grouted connection members during the 24-hour period after grouting does not exceed 10 mm, preferably does not exceed 8 mm, more preferably does not exceed 5 mm, most preferably does not exceed 1 mm.

14. A marine structure, preferably selected from a foundation pier, a foundation terminal, a jetty, a wharf, a breakwater, a drilling platform, a bridge, a floating liquefied natural gas (FLNG) unit, an energy island, a hydrogen production plant, a tidal power platform, wave power platform, an underwater tunnel, a sea wall, a groyne, offshore docking facility and/ or a wind turbine structure, obtained in a method of any of the claims 1 - 13.

15. An offshore wind turbine structure according to claim 14 selected from a gravity base structure, a monopile, a jacket, or floating structure.
